# EUROPÄISCHE PATENTSCHRIFT

(11) **EP 1 597 073 B1**
(45) Veröffentlichungstag und Bekanntmachung des Hinweises auf die Patenterteilung: **30.08.2006**
(21) Anmeldenummer: 04713042.2
(22) Anmeldetag: 20.02.2004
(51) Int. Cl.: B32B 27/32

(54) **METALLISIERTE OPAKE FOLIE**
METALLIZED OPAQUE FILM
FEUILLE OPAQUE METALLISEE

(30) Priorität: 20.02.2003 DE 10307133
(43) Veröffentlichungstag der Anmeldung: 23.11.2005
(73) Patentinhaber: Treofan Germany GmbH & Co.KG, 66539 Neunkirchen (DE)
(72) Erfinder: SCHEIDECKER, Dieter, 65343 Eltville (DE); DETLEF, Hütt, 66265 Heusweiler (DE); DÜPRE, Yvonne, 67661 Kaiserslautern (DE)
(74) Vertreter: Kremer, Viola
(86) Internationale Anmeldenummer: PCT/EP2004/001664
(87) Internationale Veröffentlichungsnummer: WO 2004/073978

(56) Entgegenhaltungen:
- EP-A- 0 361 280

## Beschreibung

Die vorliegende Erfindung betrifft eine metallisierte opake Polypropylenfolie und deren Verwendung in Laminaten, sowie ein Verfahren zur Herstellung von Beutelverpackungen aus diesen Laminaten

Biaxial orientierte Polypropylenfolien (boPP) werden heute als Verpackungsfolien in den verschiedensten Anwendungen eingesetzt. Polypropylenfolien zeichnen sich durch viele vorteilhafte Gebrauchseigenschaften wie eine hohe Transparenz, Glanz, Barriere gegen Wasserdampf, gute Bedruckbarkeit, Steifigkeit, Durchstoßfestigkeit etc. aus. Neben den transparenten Folien haben sich opake Polypropylenfolien in den vergangenen Jahren sehr erfolgreich entwickelt. Zum einen ist die besondere Optik (Opazität und Weißgrad) dieser Folien für einige Anwendungen besonders wünschenswert. Zum anderen bieten opake Folie dem Anwender eine höhere Ausbeute auf Grund der reduzierten Dichte dieser Folien.

Trotz dieser Vielfalt günstiger Eigenschaften gibt es noch heute Bereiche in denen die Polypropylenfolie mit anderen Materialien kombiniert werden muß, um bestimmte Defizite auszugleichen. Insbesondere für feuchtigkeits- und sauerstoffempfindliche Füllgüter konnten sich Polypropylenfolien als alleiniges Verpackungsmaterial bisher nicht durchsetzen. Beispielsweise spielt im Bereich der Snack Verpackung sowohl die Wasserdampfbarriere als auch die Sauerstoffbarriere eine entscheidende Rolle. Bei einer Wasseraufnahme von nur etwa 3% werden Kartoffelchips und andere Snackartikel so pappig, daß der Verbraucher sie als ungenießbar empfindet. Zusätzlich muß die Sauerstoffbarriere sicherstellen, daß die in den Snackartikeln enthaltenen Fette nicht durch Photooxidation einen ranzigen Geschmack entwickeln. Diesen Anforderungen genügt die Polypropylenfolie alleine als Verpackungsmaterial nicht.

Noch problematischer sind die Barriereeigenschaften von Polypropylenfolien mit einer vakuolenhaltigen Basisschicht, da bei diesen Typen die Vakuolen in der Basisschicht die Wasserdampfbarriere zusätzlich beeinträchtigten. Beispielweise beträgt die Wasserdampfbarriere einer transparenten biaxial orientierten Polypropylenfolie von 25 µm ca. 4,4 g/m² * Tag bei 38°C. Einen vergleichbaren Barrierewert erreicht man bei einer opaken Folien mit vakuolenhaltiger Basisschicht erst ab einer Dicke von 35 µm. Die Sauerstoffbarriere ist sowohl bei transparenten als auch bei opaken Polypropylenfolien für viele Anwendungen völlig unzureichend.

Es ist bekannt die Barriereeigenschaften von boPP durch eine Metallisierung zu verbessern, wodurch sowohl die Wasserdampf- als auch die Sauerstoffdurchlässigkeit erheblich erniedrigt wird. Opake Folien kommen bei der Metallisierung in der Regel nicht zum Einsatz, da deren Barriere ohne Metallisierung wesentlich schlechter ist als die einer transparenten Basisfolie. Die Barriere der metallisierten Folien ist umso besser je besser die Barriere der Grundfolie vor der Metallisierung ist. Beispielsweise kann die Sauerstoffdurchlässigkeit einer transparenten 20µm boPP Folie durch Metallisierung und Laminierung mit einer weiteren 20µm transparenten Folie auf ca. 40 cm³/m² * Tag * bar reduziert werden. (siehe VR Interpack 99 Special D28 "Der gewisse Knack"). Naturgemäß spielt die besondere Optik der opaken Folien nach Metallisierung keine Rolle mehr, da die Metallschicht undurchsichtig ist und das Erscheinungsbild der Folie abdeckt. Daher bieten opake Folien als Substrat für die Metallisierung keine Vorteile.

Bei Anwendungen für besonders empfindliche Produkte ist sogar die Barriere der metallisierten boPP-Folien nicht ausreichend. In solchen Fällen wird die Laminierung eines Substrats mit einer Aluminiumfolie bevorzugt. Diese Verpackung ist sehr viel aufwendiger und teurer als Verbunde aus metallisierter boPP-Folie, aber sie bietet auf Grund der Laminierung mit der hochdichten Aluminiumfolie eine hervorragende Sauerstoffbarriere. Beispielsweise werden derartige Laminate mit Aluminiumfolie für sogenannte Tütensuppen und Fertigsaucen (z.B. Maggi-Fix Produkte) und ähnliche pulverförmige Füllgüter eingesetzt, die auf Grund des hohen Fettgehaltes und der großen Oberfläche der Pulver vor Licht und Sauerstoff besonders effektiv geschützt werden müssen.

Ein zusätzliches Problem bei einer Beutelverpackung für derartige Pulver ist die Kontamination des Siegelbereiches. Zur Herstellung der Beutelverpackung (Vierrandsiegelung) werden zunächst drei Ränder gesiegelt und damit ein oben geöffneter Beutel hergestellt. Danach erfolgt die Befüllung des Beutels mit dem Pulver, wobei sich Stäube des Pulvers auch im Bereich der vierten Siegelnaht niederschlagen. Die Siegelung der so verunreinigten Bereiche ist erheblich beeinträchtigt. Dieses Problem konnte in der Vergangenheit nur durch Laminierung der jeweiligen Verbunde mit einer besonderen Siegelfolie gelöst werden. Daher umfassen heutige Verbundmaterialien für derartige Pulver eine spezielle Siegelfolie, welche auch bei Kontamination siegelt und eine Aluminiumfolie, die die Barriere sicherstellt, sowie gegebenenfalls weitere Bestandteile.

In einigen Anwendungen werden boPP-Folien auch nur im Hinblick auf den optischen Eindruck metallisiert. Hier soll beim Verbraucher der Eindruck einer hochwertigen Verpackung entstehen, ohne daß tatsächlich eine bessere Barriere vorliegt. In diesen Fällen sind die Anforderungen an die metallisierte Folie vergleichsweise unkritisch. Die metallisierte Folie muß nur eine gleichmäßige Optik und eine hinreichende Metallhaftung aufweisen.

EP 0 361 280 beschreibt eine metallisierbare, siegelfähige, biaxial orientierte Mehrsohichtfolie für die Metalisieranwendung umfassend eine Basisschicht aus Polypropylen, eine erste polyolefinische siegelfähige Oberflächenschicht und eine zweite polyolefinische metallisierbare Oberflächenschicht, wobei die zweite polyolefinische metallisierbare Oberflächenschicht ein Propylen-Ethylen-Copolymeres enthält, das einen Ethylengehalt von 1,2 bis 2,8 Gew.%, und eine Schmelzenthalpie von 95 bis 110 J/g besitzt, und die zweite Oberflächenschicht eine Dicke von 0,5 bis 1 µm aufweist.

DE 39 33 695 beschreibt eine nicht siegelbare Folie aus einer Basisschicht aus Polypropylen und mindestens einer Deckschicht, die aus einem speziellen Ethylen-Propylen-Copolymeren aufgebaut ist. Dieses Copolymere zeichnet sich durch einen Ethylengehalt von 1,2 bis 2,8 Gew.-% und einen Verteilungsfaktor von >10 und eine Schmelzeenthalpie von> 80 J/g und einen Schmelzindex von 3 bis 12 g/10min (21,6N und 230°C) aus. Es ist beschrieben, daß die Eigenschaften des Copolymeren zur Verbesserung der Bedruckbarkeit und der optischen Eigenschaften in diesen engen Grenzen gehalten werden müssen. Diese Schrift bezieht sich insgesamt auf transparente Folien.

Der vorliegenden Erfindung lag die spezielle Aufgabe zu Grunde eine Beutelverpackung für pulverförmiges Füllgut zur Verfügung zu stellen, welche das Füllgut vor Feuchte und Sauerstoffzufuhr besonders gut schützt und welche gleichzeitig von außen eine ansprechende bedruckte Optik aufweist.

Es war zusätzlich Aufgabe der vorliegenden Erfindung eine metallisierte Folie mit hervorragenden Siegeleigenschaften zur Verfügung zu stellen, welche gleichzeitig hervorragende Barriereeigenschaften, insbesondere gegenüber Sauerstoff und Wasserdampf nach der Metallisierung aufweisen soll. Selbstverständlich müssen auch ansonsten die üblichen Gebrauchseigenschaften der Folie im Hinblick auf ihre Verwendung als Laminatbestandteil erhalten bleiben. So soll die Folie beispielsweise noch immer eine gute Verarbeitbarkeit aufweisen.

Die der Erfindung zugrundeliegende Aufgabe wird gelöst durch eine metallisierte, biaxial orientierte opake Polypropylenmehrschichtfolie, welche eine vakuolenhaltigen Basisschicht und mindestens einer ersten Deckschicht umfaßt, wobei die erste Deckschicht mindestens 80 Gew.% eines Propylen-Ethylen-Copolymeren enthält, welches einen Ethylengehalt von 1,2 bis< 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und wobei die erste Deckschicht eine Dicke von mindestens 4 µm aufweist und auf ihrer Oberfläche metallisiert ist.

Die Aufgabe wird auch gelöst durch eine metallisierte, biaxial orientierte opake Polypropylenmehrschichtfolie, welche eine vakuolenhaltigen Basisschicht und mindestens eine erste Zwischenschicht und eine erste Deckschicht auf der äußeren Seite der ersten Zwischenschicht umfaßt, wobei die erste Deckschicht und die erste Zwischenschicht jeweils mindestens 80 Gew.-% eines Propylen-Ethylen-Copolymeren enthalten, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die erste Deckschicht eine Dicke von 0,5 µm und die erste Zwischenschicht eine Dicke von mindestens 3,5 µm aufweist und die Folie auf der äußeren Oberfläche der ersten Deckschicht metallisiert ist.

Die Aufgabe wird des weiteren durch Laminate gelöst, welche aus diesen Folien hergestellt werden.

Im Sinne der vorliegenden Erfindung ist die Basisschicht diejenige Schicht der Folie welche mehr als 50%, vorzugsweise mehr als 65% der Gesamtdicke der Folie ausmacht. Zwischenschichten sind Schichten die zwischen der Basisschicht und einer weiteren Polyolefin-Schicht liegen. Deckschichten bilden die Außenschichten der unmetallisierten coextrudierten Folie. Deckschichten können unmittelbar auf der Basisschicht aufgebracht sein. Des weiteren gibt es Ausführungsformen bei denen die Deckschichten auf der oder den Zwischenschichten der Folie aufgebracht sind.

Die vorliegende Erfindung geht von den bekannten metallisierten transparenten coextrudierten Folien aus, welche bekanntlich die geforderten guten Barriereeigenschaften aufweisen. Es wurde gefunden, daß sich diese bekannten metallisierten Folien mit transparenten Polyolefinschichten nicht vorteilhaft für Beutelverpackungen verwenden lassen, da die Siegeleigenschaften mangelhaft sind, insbesondere beeinträchtigen Verunreinigungen durch das pulverförmige Füllgut die Qualität der Siegelnaht erheblich. Verschiedene Modifikationen der coextrudierten Siegelschicht wurden im Rahmen der vorliegenden Erfindung untersucht. Das Problem konnte hierdurch jedoch nicht befriedigend gelöst werden. Überraschenderweise wurde gefunden, daß die Siegeleigenschaften durch Verwendung einer opaken Basisschicht mit Vakuolen (statt transparenter Basis) verbessert werden konnten. Mit einer vakuolenhaltigen Basisschicht wurde die Qualität der Siegelnaht durch Pulververunreinigungen wesentlich weniger beeinträchtigt. Es stellte sich jedoch auch heraus, daß durch diese Maßnahme gleichzeitig die Barriere der Folie (auch nach Metallisierung) derartig beeinträchtigt wurde, daß im Ergebnis keine akzeptable Qualität für die Beutelverpackung realisiert werden konnte. Überraschenderweise konnte die durch eine vakuolenhaltige Basisschicht beeinträchtigte Barriere, durch eine Modifikation der zu metallisierenden Schicht der Folie kompensiert werden. Es wurde gefunden, daß die Folie mit einer opaken Basisschicht, nach der Metallisierung eine hervorragende Barriere aufweist, wenn die zu metallisierende Schicht eine Dicke von mindestens 4 µm aufweist und aus dem im Anspruch 1 und 2 näher definierten Propylen-Ethylen-Copolymeren mit niedrigem Ethylengehalt aufgebaut ist.

Diese zu metallisierende dicke Schicht läßt sich durch eine einzige Deckschicht entsprechender Dicke auf der opaken Basisschicht realisieren. Vorteilhaft kann auch eine Zwischenschicht mit einer Deckschicht kombiniert werden, wobei hier die Gesamtdicke aus Zwischen- und Deckschicht gleichfalls eine Mindestdicke von 4µm aufweisen soll und selbstverständlich beide Schichten aus dem besagten Copolymeren sein müssen. Diese Ausführungsform ist hinsichtlich der Additivierung besonders günstig, da die jeweiligen Additive für die Deckschicht und für die Zwischenschicht unabhängig ausgewählt werden können. Beispielsweise können Antiblockmittel gezielt der Deckschicht zugesetzt werden, wo sie in geringen Menge das Verblocken wirksam verhindern.

Überraschenderweise verbessert diese Maßnahme die Barriere der opaken Folie nach Metallisierung erheblich, obwohl an den unmetallsierten opaken Folien keine besonderen Barriere-Eigenschaften nachgewiesen werden können.

Die erfindungsgemäße metallisierte opake Folien bietet gegenüber transparenten metallisierten Folien verbesserte Siegeleigenschaften und gleichzeitig -trotz vakuolenhaltiger Basisschicht- eine sehr gute Barriere nach Metallisierung sowohl gegenüber Wasserdampf als auch gegenüber Sauerstoff. Diese Folie kann daher besonders vorteilhaft zur Herstellung von Beutelverpackungen für Wasserdampf- und Sauerstoff-empfindliche pulverförmige Füllgüter eingesetzt werden.

Die erfindungsgemäß in der zu metallisierenden Schicht eingesetzten Propylencopolymeren mit einem niedrigem Ethylengehalt und einem hohem Schmelzpunkt sind an sich bekannt und werden nachstehend im Rahmen der vorliegenden Erfindung auf Grunde ihres vergleichsweise geringen Ethylengehaltes auch "Minicopo" genannt. So beschreiben verschiedene Lehren den vorteilhaften Einsatz dieser Rohstoffe. Z.B. ist in EP 0 361 280 angegeben, daß dieses Material vorteilhaft als Deckschicht bei metallisierbaren Folien ist. DE 39 33 695 beschreibt verbesserte Hafteigenschaften dieser Deckschichten. Es war jedoch weder bekannt noch vorhersehbar, daß diese speziellen Copolymeren als Deckschicht auf einer vakuolenhaltigen Basisschicht eine günstige Auswirkung auf die Barriereeigenschaften nach Metallisierung haben, wenn die Schichtdicke mindestens 4µm beträgt.

Für die Zwecke der vorliegenden Erfindung sind Propylen-Ethylen-Copolymere mit einem Ethylengehalt von 1,2 bis 2,8 Gew.-%, insbesondere 1,2 bis 2,3 Gew.-%, vorzugsweise 1,5 bis <2 Gew.-% besonders bevorzugt. Der Schmelzpunkt liegt vorzugsweise in einem Bereich von 150 bis 155°C und die Schmelzeenthalpie vorzugsweise in einem Bereich von 90 bis 100J/g. Der Schmelzflußindex beträgt im allgemeinen 3 bis 15g/10min, vorzugsweise 3 bis 9g/10min (230°C, 21,6N DIN 53 735). Des weiteren ist es besonders vorteilhaft, wenn ein hoher Anteil der Ethyleneinheiten isoliert zwischen zwei Propylenbausteinen in die Propylenkette eingebaut sind. Diese Charakteristik kann über einen sogenannten Verteilungsfaktor beschrieben werden, der im allgemeinen über 5, vorzugsweise über 10, insbesondere >15 betragen sollte. Die Bestimmung des Verteilungsfaktors ist beispielsweise in DE 39 33 695 beschrieben (Seite 2), worauf hiermit ausdrücklich Bezug genommen wird.

Im allgemeinen enthält die erste Deckschicht mindestens 80 Gew.-%, vorzugsweise 95 bis 100 Gew.-%, insbesondere 98 bis <100 Gew.-% des beschriebenen Copolymeren. Neben diesem Hauptbestandteil kann die Deckschicht übliche Additive wie Antiblockmittel, Stabilisatoren und/oder Neutralisationsmittel in jeweils wirksamen Mengen enthalten. Gegebenenfalls können geringe Mengen eines zweiten verschiedenen Polyolefins, vorzugsweise Propylenpolymeren, enthalten sein, wenn dessen Anteil unter 20 Gew.-%, vorzugsweise unter 5 Gew.-%, liegt und die Metallisierbarkeit der Schicht nicht beeinträchtigt wird. Derartige Ausführungsformen sind nicht bevorzugt, aber denkbar falls beispielsweise Antiblockmittel über Konzentrate eingearbeitet werden, die auf einem anderen Polymeren, wie z.B. Propylenhomopolymer oder andere Propylenmischpolymerisaten, beruhen. Im Hinblick auf die Metallisierung sollten Additive die die Metallisierbarkeit beeinträchtigen in der Deckschicht nicht enthalten sein. Dies gilt beispielsweise für migrierende Gleitmittel oder Antistatika.

In einer zweiten erfindungsgemäßen Ausführungsform ist die metallisierbare Schicht eine Kombination aus einer ersten Deckschicht D und einer ersten Zwischenschicht Z, die zwischen der besagten ersten Deckschicht und der Basisschicht B angebracht ist, d.h. eine Oberfläche dieser Zwischenschicht ist mit der Basisschicht verbunden und die zweite gegenüberliegende Oberfläche ist mit der Deckschicht verbunden, gemäß einem Aufbau BZD

Für diese Ausführungsformen sind beide Schichten, erste Deckschicht und erste Zwischenschicht aus dem gleichen vorstehend beschriebenen Minicopo aufgebaut. Beide Schichten enthalten jeweils mindesten 80 Gew.-%, vorzugsweise 95 bis 100 Gew.-%, insbesondere 98 bis <100 Gew.-% des Polymeren, wobei die genaue Zusammensetzung der einzelnen Schichten selbstverständlich nicht identisch sein muß. Diese Ausführungsformen mit einer Kombination aus Zwischenschicht und Deckschicht sind vorteilhaft im Hinblick auf mögliche verschiedene Additivierungen der einzelnen Schichten. So ist es beispielsweise möglich Antiblockmittel nur der Deckschicht zuzufügen und die Zwischenschicht frei von anderweitigen Zusatzstoffen zu halten, Im allgemeinen werden jedoch beide Schichten Stabilisatoren und Neutralisationsmittel enthalten. Insbesondere sind transparente Zwischenschichten bevorzugt, die keine vakuolenhaltigen Füllstoffe enthalten. TiO₂ kann ohne wesentliche technische Nachteile zugefügt werden, wenngleich der dadurch erzielte höhere Weißgrad der Folie in der Anwendung, wenn überhaupt, nur nach dem Öffnen des Beutels als weißere Optik der Innenseite erkennbar wäre.

Für die erste beschriebene Ausführungsform beträgt die Dicke der ersten Deckschicht im allgemeinen mindestens 4µm, vorzugsweise 5 bis 10µm. Für Ausführungsformen mit Zwischenschicht gelten diese Angaben entsprechend für die Gesamtdicke von Zwischenschicht und Deckschicht, wobei die Dicke der Zwischenschicht im allgemeinen mindestens 3,5 µm, vorzugsweise 4,5 - 8µm beträgt und die Dicke der Deckschicht im allgemeinen 0,5 bis 4 µm, vorzugsweise 0,5 bis 2µm beträgt.

Zur Verbesserung der Metallhaftung wird die Oberfläche der ersten Deckschicht im allgemeinen in an sich bekannter Weise mittels Corona, Flamme oder Plasma einem Verfahren zur Erhöhung der Oberflächenspannung unterworfen. Typischerweise liegt dann die Oberflächenspannung der so behandelten noch nicht metallisierten Deckschicht in einem Bereich von 35 bis 45 mN/m.

Die erfindungsgemäße Folie zeichnet sich weiterhin durch Vakuolen in der Basisschicht aus, die der Folie ein opakes Aussehen verleihen. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die vakuolenhaltige Basisschicht der Mehrschichtfolie enthält Polyolefin, vorzugsweise ein Propylenpolymer und vakuoleninitierende Füllstoffe sowie gegebenenfalls weitere übliche Additive in jeweils wirksamen Mengen. Im allgemeinen enthält die Basisschicht mindestens 70 Gew.-%, vorzugsweise 75 bis 98 Gew.-%, insbesondere 85 bis 95 Gew.-%, des Polyolefins, jeweils bezogen auf das Gewicht der Schicht. In einer weiteren Ausführungsform kann die Basisschicht zusätzlich Pigmente, insbesondere TiO₂ enthalten.

Als Polyolefine der Basisschicht sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 1 bis 10 g/10 min, vorzugsweise 2 bis 8 g/10 min, bei 230°C und einer Kraft von 21,6 N (DIN 53735). lsotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, MDPE, LDPE, VLDPE und LLDPE, wobei der Anteil dieser Polyolefine jeweils 15 Gew.-%, bezogen auf die Polymermischung, nicht übersteigt.

Die opake Basisschicht der Folie enthält vakuoleninitierende Füllstoffe im allgemeinen in einer Menge von maximal 30 Gew.-%, vorzugsweise 2 bis 25 Gew.-%, insbesondere 2 bis 15 Gew.-%, bezogen auf das Gewicht der opaken Basisschicht.

Im Sinne der vorliegenden Erfindung sind vakuoleniniziierende Füllstoffe feste Teilchen, die mit der Polymermatrix unverträglich sind und beim Verstrecken der Folie zur Bildung von vakuolenartigen Hohlräumen führen, wobei Größe, Art und Anzahl der Vakuolen von der Menge und der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleninizüerenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm, vorzugsweise 1 bis 4 µm. Der chemische Charakter der Teilchen spielt eine untergeordnete Rolle.

Übliche vakuoleninizüerende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere Copolymere von cyclischen Olefinen (COC) wie in EP-A-O 623 463 beschrieben, Polyester, Polystyrole, Polyamide, halogenierte organische Polymere, wobei Polyester wie beispielsweise Polybutylenterephthalate und Cycloolefincopolymere bevorzugt sind. Unverträgliche Materialien bzw. unverträgliche Polymere im Sinne der vorliegenden Erfindung bedeutet, daß das Material bzw. das Polymere in der Folie als separates Teilchen bzw. als separate Phase vorliegt.

In einer weiteren Ausführungsform kann die Basisschicht zusätzlich Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Basisschicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Der Begriff "Pigmente" ist im allgemeinen an einen mittleren Teilchendurchmesser im Bereich von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm.

Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolin-Ton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden. Titandioxid ist besonders bevorzugt. Verschiedene Modifikationen und Beschichtungen von TiO₂ sind an sich im Stand der Technik bekannt.

Die Dichte der Folie wird wesentlich von der Dichte der Basisschicht bestimmt. Die Dichte der vakuolenhaltigen Basisschicht, wird im allgemeinen durch die Vakuolen reduziert sein, sofern nicht größere Mengen an TiO2 den dichtereduzierenden Effekt der Vakuolen kompensieren. Im allgemeinen liegt die Dichte der opaken Basisschicht in einem Bereich von 0,45 - 0,85g/cm³. Die Dichte der Folie kann für die beschriebenen weiß-opaken Ausführungsformen in einem größeren Bereich variieren und liegt im allgemeinen in einem Bereich von 0,5 bis 0,95g/cm³, vorzugsweise 0,6 bis 0,9g/cm³. Die Dichte wird grundsätzlich durch Zusatz von TiO₂ erhöht, aber gleichzeitig durch die vakuoleninitierenden Füllstoffe in der Basisschicht erniedrigt. Für eine Basisschicht, welche kein dichteerhöhendes TiO₂ enthält liegt die Dichte der opaken Basisschicht vorzugsweise in einem Bereich von 0,45 bis 0,75 g/cm³, wohingegen für die weiß-opake Basisschicht der Bereich von 0,6 bis 0,9g/cm³ bevorzugt ist

Die Gesamtdicke der Folie liegt im allgemeinen in einem Bereich von 20 bis 100µm, vorzugsweise 25 bis 60 µm, insbesondere 30 bis 50µm. Die Dicke der Basisschicht beträgt entsprechend 10 bis 50µm, vorzugsweise 10 bis 40µm.

In einer weiteren bevorzugten Ausführungsform umfaßt die Folie noch weitere Schichten, die auf der gegenüberliegenden Seite der Basisschicht aufgebracht sind. Durch eine zweite Deckschicht resultieren drei- oder vierschichtige Folien. Ausführungsformen die zusätzlich eine zweite Zwischenschicht und eine darauf aufgebrachte zweite Deckschicht aufweisen führen zu vier- oder fünfschichtige Folien. In diesen Ausführungsformen beträgt die Dicke der zweiten Deckschicht im allgemeinen 0,5 - 3 µm, Zwischenschichten liegen im Bereich von 1 bis 8 µm. Kombinationen aus Zwischenschicht und Deckschicht haben vorzugsweise eine Gesamtdicke von 2 bis 8 µm. Als weitere Schichten sind siegelfähige Schichten bevorzugt, wobei hierunter sowohl heißsiegelfähige als auch kaltsiegelfähige Schichten verstanden werden. Kaltsiegelbeschichtungen können auch direkt auf die Oberfläche der Basisschicht aufgebracht werden. Im allgemeinen ist es jedoch bevorzugt die Basisschicht zunächst mit einer polymeren Deckschicht abzudecken und die Kaltsiegelbeschichtung auf diese polymere Deckschicht aufzubringen.

Die zusätzliche/n Schicht oder Schichten enthalten im allgemeinen mindestens 80 Gew.-%, vorzugsweise 90 bis <100 Gew.% olefinische Polymere oder Mischungen daraus. Geeignete Polyolefine sind beispielsweise Polyethylene, Propylencopolymere und/oder Propylenterpolymere, sowie die bereits im Zusammenhang mit der Basisschicht beschrieben Propylenhomopolymeren.

Geeignete Propylenco- oder Terpolymere sind im allgemeinen aus mindestens 50 Gew.-% Propylen und Ethylen und/oder Butyleneinheiten als Comonomer aufgebaut. Bevorzugte Mischpolymerisate sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.%, bevorzugt 8 bis 10 Gew.-%, jeweils bezogen auf das Gesamtgewicht des Terpolymeren. Diese Co- und Terpolymeren haben im allgemeinen einen Schmelzflußindex von 3 bis 15 g/10min, vorzugsweise 3 bis 9 g/10min (230°C, 21,6N DIN 53735) und einen Schmelzpunkt von 70 bis 145°C, vorzugsweise 90 bis 140°C (DSC).

Geeignete Polyethylene sind beispielsweise HDPE, MDPE, LDPE, LLDPE, VLDPE worunter HDPE und MDPE Typen besonders bevorzugt sind. Das HDPE hat im allgemeinen einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt 35 bis 80 %, vorzugsweise 50 bis 80 %. Die Dichte, gemessen bei 23 °C nach DIN 53 479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 130 °C.

Im Hinblick auf die Verwendung der Folie als Beutelverpackung für pulverförmige Füllgüter ist für die zweite Deckschicht und gegebenenfalls für die zweite Zwischenschicht eine Mischung aus den beschriebenen Propylen-Co- und/oder Terpolymeren und den genannten Polyethylenen besonders bevorzugt. Diese Deckschichtmischungen sind im Hinblick auf die Siegeleigenschaften der Folie besonders vorteilhaft, wenn der Beutel zum Abpacken von pulverförmigem Füllgut eingesetzt wird. Mit den gängigen Verfahren zum Abpacken von Pulvern kann eine Verunreinigung der Siegelbereiche nicht wirksam verhindert werden. Diese Verunreinigungen führen häufig zu Problemen beim Siegeln. Die Siegelnähte haben in den kontaminierten Bereiche eine verringerte oder gar keine Festigkeit, die Dichtigkeit der Siegelnaht ist ebenfalls beeinträchtigt. Überraschenderweise stören die Verunreinigungen beim Siegeln nicht oder nur noch geringfügig, wenn die Siegelschichten aus einer Mischung aus Propylenpolymeren und Polyethylenen aufgebaut sind. Hierfür sind HDPE und/oder MDPE haltige Deckschichtmischungen mit einem HDPE oder MDPE Anteil von 10 bis 50 Gew.-%, insbesondere 15 bis 40 Gew.-% besonders vorteilhaft. Für diese besonders vorteilhaften Anwendungen sollte die Schichtdicke der zweiten Deckschicht, bzw. die Gesamtdicke aus zweiter Zwischenschicht und zweiter Deckschicht mindestens 4 µm, vorzugsweise 4 bis 8 µm, insbesondere 4 bis 6µm betragen.

Es wird vermutet, daß die Kompressibilität der vakuolenhaltigen Basisschicht synergistisch mit der speziellen Deckschichtmischung aus Propylenmischpolymerisat und HDPE oder MDPE zusammenwirkt. Es wurde gefunden, daß eine derartige Deckschichtmischung auf einer transparenten Basisschicht vergleichsweise schlechtere Siegeleigenschaften aufweist.

Wie bereits erwähnt enthalten alle Schichten der Folie vorzugsweise Neutralisationsmittel und Stabilisatoren in jeweils wirksamen Mengen.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phe-nolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft

Neutralisationsmittel sind vorzugsweise Calciumstearat und/oder Calciumcarbonat und/oder synthetisches Dihydrotalcit (SHYT) einer mittleren Teilchengröße von höchstens 0,7 µm, einer absoluten Teilchengröße von kleiner 10 µm und einer spezifischen Oberfläche von mindestens 40 m²/g. Im allgemeinen werden Neutralisationsmittel in einer Menge von 50 bis 1000 ppm, bezogen auf die Schicht eingesetzt.

In einer bevorzugten Ausführungsform werden der zu metallisierenden Deckschicht als auch der gegenüberliegenden Deckschicht Antiblockmittel zugefügt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche Polymerisate wie Polymethylmethacrylat (PMMA) Polyamide, Polyester, Polycarbonate und dergleichen, bevorzugt werden Polymethylmethacrylat (PMMA), Siliciumdioxid und Calciumcarbonat. Die wirksame Menge an Antiblockmittel liegt im Bereich von 0,1 bis 2 Gew.-%, vorzugsweise 0,1 bis 0,5 Gew.-%, bezogen auf die jeweilige Deckschicht. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Die Erfindung betrifft weiterhin ein Verfahren zur Herstellung der erfindungsgemäßen Mehrschichtfolie nach dem an sich bekannten Coextrusionsverfahren, wobei insbesondere das Stenterverfahren bevorzugt ist.

Im Rahmen dieses Verfahrens werden die den einzelnen Schichten der Folie entsprechenden Schmelzen durch eine Flachdüse coextrudiert, die so erhaltene Folie zur Verfestigung auf einer oder mehreren Walze/n abgezogen, die Folie anschließend gestreckt (orientiert), die gestreckte Folie thermofixiert und gegebenenfalls an der zur Behandlung vorgesehenen Oberflächenschicht plasma- corona- oder flammbehandelt.

Im Einzelnen wird hierbei wie beim Extrusionsverfahren üblich das Polymere bzw. die Polymermischung der einzelnen Schichten in einem Extruder komprimiert und verflüssigt, wobei die vakuoleninitierenden Füllstoffe und andere gegebenenfalls zugesetzte Additive bereits im Polymer bzw. in der Polymermischung enthalten sein können. Alternativ können diese Zusatzstoffe auch über ein Masterbatch eingearbeitet werden.

Die Schmelzen werden dann gemeinsam und gleichzeitig durch eine Flachdüse (Breitschlitzdüse) gepreßt, und die ausgepreßte mehrschichtige Folie wird auf einer oder mehreren Abzugswalzen bei einer Temperatur von 5 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 80 bis 150 °C zweckmäßigerweise mit Hilfe zweier entsprechend dem angestrebten Streckverhältnis verschieden schnellaufender Walzen durchführen und das Querstrecken vorzugsweise bei einer Temperatur von 120 bis 170°C mit Hilfe eines entsprechenden Kluppenrahmens. Die Längsstreckverhältnisse liegen im Bereich von 4 bis 8 vorzugsweise 4,5 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m, insbesondere 39 bis 40mN/m.

Für die alternative Coronabehandlung wird die Folie zwischen zwei als Elektroden dienenden Leiterelementen hindurchgeführt, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 37 bis 45 mN/m bevorzugt sind.

Die coextrudierte mehrschichtige Folie wird nach den an sich bekannten Verfahren auf der äußeren Oberfläche der ersten Deckschicht mit einer Metallschicht, vorzugsweise aus Aluminium versehen. Diese Metallisierung erfolgt in einer Vakuumkammer in der Aluminium verdampft und auf der Folienoberfläche niedergeschlagen wird. In einer bevorzugten Ausführungsform wird die zu metallisierende Oberfläche unmittelbar vor der Metallisierung einer Plasmabehandlung unterworfen. Die Dicke der Metallschicht korreliert im allgemeinen mit der optischen Dichte der metallisierten Folie, d.h. je dicker die Metallschicht ist, umso höher ist die optische Dichte der metallisierten Folie. Im allgemeinen sollte die optische Dichte der erfindungsgemäße metallisierte Folie mindestens 2, insbesondere 2,5 bis 4 betragen. Die so metallisierte Folie kann direkt zur Herstellung von Beutelverpackungen eingesetzt werden, beispielsweise für Verpackungen von Kartoffelpüreeflocken, Kaffepulver, etc..

Die erfindungsgemäße opake Folie zeichnet sich durch hervorragende Barrierewerte aus, welche bisher für opake Folien noch nicht realisiert wurden. Die Wasserdampfdurchlässigkeit der erfindungsgemäßen opaken metallisierten Folie liegt im allgemeinen ≤ 0,5 g/m² * Tag bei 38°C und 90% relativer Luftfeuchte, vorzugsweise in einem Bereich von 0,05 bis 0,3 g/m² * Tag. Die Sauerstoffdurchlässigkeit beträgt vorzugsweise ≤ 50 cm³/m²*Tag*bar, vorzugsweise 5 bis 30 cm³/m²*Tag*bar, insbesondere 5 bis 25 cm³/m²*Tag*bar.

In einer bevorzugten Ausführungsform der Verpackung wird die erfindungsgemäße metallisierte Folie mit einer weiteren biaxial orientierten Folie laminiert, wobei die Laminierung gegen die metallisierte Seite der metallisierten Folie erfolgt. Die weitere boPP Folie wird vorzugsweise bedruckt, damit die Beutelverpackung ein attraktives Erscheinungsbild aufweist. Grundsätzlich können für die weitere Folie transparente oder auch opake boPP Folien eingesetzt werden. Vorzugsweise wird die metallisierte Folie gegen eine opake mehrschichtige boPP Folie laminiert, welche eine vakuolenhaltige Basischicht und eine bedruckbare Deckschicht aufweist. Geeignet sind beispielsweise vierschichtige Folie mit einer Deckschicht auf einer Oberfläche der Basisschicht die für die Laminierung gegen die Metallschicht geeignet ist und einer Kombination aus Homopolymer-Zwischenschicht, die gegebenenfalls mit TiO2 modifizierte ist, und darauf aufgebrachter bedruckbarer Deckschicht auf der gegenüberliegenden Oberfläche der Basisschicht. Diese Laminate zeichnen sich durch einen besonders ansprechenden Oberflächenglanz des fertigen bedruckten Laminats aus.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Wasserdampf- und Sauerstoffdurchlässigkeit

Die Wasserdampfdurchlässigkeit wird gemäß DIN 53122 Teil 2 bestimmt. Die Bestimmung der Sauerstoffbarrierewirkung erfolgt gemäß Entwurf DIN 53 380 Teil 3 bei einer Luftfeuchte von 50 %.

### Bestimmung des Ethylengehalts

Der Ethylengehalt der Copolymeren wird mittels ¹³C-NMR Spektroskopie bestimmt. Die Messungen wurden mit einem Kernresonanzspektrometer der Firma Bruker Avance 360 durchgeführt. Das zu charakterisierende Copolymer wird in Tetrachlorethan gelöst, so daß eine 10% Mischung entsteht. Als Bezugsstandard wurde Octamethyltetrasiloxan (OTMS) zugegeben. Das Kernresonanzspekrum wurde bei 120°C gemessen. Die Auswertung der Spektren erfolgte wie in J.C. Randall Polymer Sequence Distribution (Academic Press, New York, 1977) beschrieben.

### Schmelzpunkt und Schmelzenthalpie

Die Bestimmung des Schmelzpunkt und der Schmelzenthalpie erfolgt mittels DSC-(Differential-Scanning-Calometrie) Messung (DIN 51 007 und DIN 53 765). Einige Milligramm (3 bis 5 mg) des zu charakterisierenden Rohstoffs werden in einem Differentialkalorimeter mit einer Heizgeschwindigkeit von 20°C pro Minute aufgeheizt. Es wird die Wärmeflußrate gegen die Temperatur aufgetragen und der Schmelzpunkt als Maximum der Schmelzkurve und die Schmelzenthalpie als Fläche des jeweiligen Schmelzepeaks ermittelt.

### Dichte

Die Dichte wird nach DIN 53 479, Verfahren A, bestimmt.

### Oberflächenspannung

Die Oberflächenspannung wurde mittels Tintenmethode nach DIN 53 364 bestimmt.

### Optische Dichte

Die optische Dichte ist die Messung der Durchlässigkeit eines definierten Lichtstrahls. Die Messung wird mit einem Densitometer vom Typ TCX der Firma Tobias Associates Inc durchgeführt. Die optische Dichte ist ein Relativwert der dimensionslos angegeben wird.

Die Erfindung wird nunmehr durch die nachfolgenden Beispiele erläutert.

### Beispiel 1:

Nach dem Coextrusionsverfahren wurde aus einer Breitschlitzdüse bei einer Extrusionstemperatur von 240 bis 270°C eine dreischichtige Vorfolie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die Oberfläche der ersten Deckschicht wurde mittels Corona zur Erhöhung der Oberflächenspannung vorbehandelt. Die dreischichtige Folie hatte einen Schichtaufbau erste Deckschicht/Basisschicht/zweite Deckschicht. Die einzelnen Schichten der Folie hatten die folgende Zusammensetzung:

### Erste Deckschicht (5,0 µm):

| | |
|---|---|
| 99,87 Gew.-% | Ethylen-Propylencopolymerisat mit einem Ethylen-Anteil von 1,7 Gew.-% (bezogen auf das Copolymer) und einem Schmelzpunkt von 155 °C; und einem Schmelzflußindex von 8,5 g/10 min bei 230 °C und 2,16 kg Belastung (DIN 53 735) und einer Schmelzeenthalpie von 96,9 J/g |
| 0,13 Gew-% | Polymethylmethacrylat (PMMA) |

### Basisschicht:

| | |
|---|---|
| 91,3 Gew.-% | Propylenhomopolymerisat (PP) mit einem n-heptanlöslichen Anteil von etwa 4 Gew.-% (bezogen auf 100 % PP) und einem Schmelzpunkt von 163 °C; und einem Schmelzflußindex von 3,3 g/10 min bei 230 °C und 2,16 kg Belastung (DIN 53 735) und |
| 4,0 Gew.-% | Calciumcarbonat mit einem mittleren Teilchendurchmesser von 1,4 µm |
| 4,7 Gew.-% | Titandioxid mit einem mittleren Teilchendurchmesser von 0,1 bis 0,3 µm |

### Zweite Deckschicht (2,0 µm):

| | |
|---|---|
| 99,7 Gew.-% | Ethylen-Propylencopolymerisat mit einem Ethylen-Anteil von 4 |
| | Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g |
| 0,3 Gew.-% | Antiblockmittel mit einem mittleren Teilchendurchmesser ca. 4µm (Sylobloc 45) |

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt:

| | |
|---|---|
| Extrusion: | Extrusionstemperatur ca. 250 -270°C |
| Abkühlwalze: | Temperatur 30°C, |
| Längsstreckung: | T = 125 °C |
| Längsstreckung um den | Faktor 5 |
| Querstreckung: | T = 165 °C |
| Querstreckung um den | Faktor 9 |
| Fixierung | T = 143°C |

Die Folie wurde auf der Oberfläche der ersten Deckschicht mittels Corona oberflächenbehandelt und wies eine Oberflächenspannung von 38mN/m auf. Die Folie hatte eine Dicke von 40 µm und ein opakes Aussehen.

### Beispiel 2

Es wurde eine opake Folie nach Beispiel 1 hergestellt. Im Unterschied zu Beispiel 1 wurde die Zusammensetzung der zweiten Deckschicht geändert und eine zweite Zwischenschicht eingefügt:

### Zweite Deckschicht (2µm)

| | |
|---|---|
| 65 Gew.-% | Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g |
| 34,8 Gew.-% | Polyethylen mit einer Dichte von 0,93 g/cm³ und einem Schmelzflußindex von (190°C und 50 N) 0,8 g/10min |
| 0,2 Gew.-% | Antiblockmittel mit einem mittleren Teilchendurchmesser ca. 4 µm (Sylobloc 45) |

### Zweite Zwischenschicht (3µm)

| | |
|---|---|
| 65 Gew.-% | Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53735) und einer Schmelzeenthalpie von 64,7 J/g |
| 34,8 Gew.% | Polyethylen mit einer Dichte von 0,93 g/cm³ und einem Schmelzflußindex (190°C und 50 N) von 0,8 g/10min |
| 0,2 Gew.-% | Antiblockmittel mit einem mittleren Teilchendurchmesser ca. 4 µm (Sylobloc 45) |

Die Gesamtdicke aus zweiter Deckschicht und zweiter Zwischenschicht betrug 5µm.

### Beispiel 3

Es wurde eine opake Folie nach Beispiel 2 hergestellt. Im Unterschied zu Beispiel 2 wurde eine erste Zwischenschicht mit einer Dicke von 4µm zwischen der Basis- und der ersten Deckschicht eingefügt. Zusätzlich wurde die Dicke der ersten Deckschicht von 5 µm auf 1,5µm reduziert, so daß eine Gesamtdicke aus erster Deckschicht und erster Zwischenschicht von 5,5 µm resultierte :

### Erste Zwischenschicht (4µm):

| | |
|---|---|
| 100 Gew.-% | Ethylen-Propylencopolymerisat mit einem Ethylen-Anteil von 1,7 |
| | Gew.-% (bezogen auf das Copolymer) und einem Schmelzpunkt von 155 °C; und einem Schmelzflußindex von 8,5 g/10 min bei 230 °C und 2,16 kg Belastung (DIN 53 735) und einer Schmelzeenthalpie von 96,9 J/g. |

### Vergleichsbeispiel 1

Es wurde eine opake Folie nach Beispiel 1 hergestellt. Im Unterschied zu Beispiel 1 betrug die Dicke der ersten Deckschicht nur 0,5 µm. Die Gesamtdicke der Folie betrug 40 µm.

### Vergleichsbeispiel 2

Es wurde eine opake Folie nach Beispiel 1 hergestellt. Im Unterschied zu Beispiel 1 wurde die Dicke der ersten Deckschicht von 5µm auf 1µm reduziert und eine erste Zwischenschicht von 4µm aus Propylen-Homopolymer eingefügt:

### Erste Zwischenschicht (4µm):

| | |
|---|---|
| 100 Gew.-% | Propylenhomopolymerisat (PP) mit einem n-heptanlöslichen Anteil von 3,3 Gew.-% (bezogen auf 100 % PP) und einem Schmelzpunkt von 161 °C; und einem Schmelzflußindex von 2,9 g/10 min bei 230 °C und 2,16 kg Belastung (DIN 53 735) |

### Erste Deckschicht (1µm):

| | |
|---|---|
| 99,7 Gew.-% | Ethylen-Propylencopolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und einer Schmelzeenthalpie von 64,7 J/g |
| 0,3 Gew.-% | Antiblockmittel mit einem mittleren Teilchendurchmesser ca. 4µm (Sylobloc 45). |

### Vergleichsbeispiel 3

Es wurde ein Folie wie in Vergleichsbeispiel 2 beschrieben hergestellt. Im Unterschied zu Vergleichsbeispiel 2 wurde die Zusammensetzung der ersten Deckschicht geändert:

### Erste Deckschicht (1µm):

| | |
|---|---|
| 99,87 Gew.-% | Ethylen-Propylencopolymerisat mit einem Ethylen-Anteil von 1,7 Gew.-% (bezogen auf das Copolymer) und einem Schmelzpunkt von 155 °C; und einem Schmelzflußindex von 8,5 g/10 min bei 230 °C und 2,16 kg Belastung (DIN 53 735) und einer Schmelzeenthalpie von 96,9 J/g |
| 0,13 Gew-% | Polymethylmethacrylat (PMMA). |

### Vergleichsbeispiel 4

Es wurde eine Folie nach Beispiel 1 hergestellt, im Unterschied zu Beispiel 1 betrug die Dicke der ersten Deckschicht nur 0,5 µm. Zusätzlich wurde die Zusammensetzung der Basisschicht geändert.

### Basisschicht:

| | |
|---|---|
| 100 Gew.-% | Propylenhomopolymerisat (PP) mit einem n-heptanlöslichen Anteil von 3,3 Gew.-% (bezogen auf 100 % PP) und einem Schmelzpunkt von 161 °C; und einem Schmelzflußindex von 2,9 g/10 min bei 230 °C und 2,16 kg Belastung (DIN 53 735) |

Die Folie war insgesamt 35 µm dick. Im Unterschied zu Beispiel 1 war diese Folie transparent.

### Vergleichsbeispiel 5

Es wurde eine Folie wie in Vergleichsbeispiel 2 beschrieben hergestellt. Im Unterschied zu Vergleichsbeispiel 2 wurde die Zwischenschicht weggelassen. Zusätzlich wurde die Zusammensetzung der Basisschicht geändert:

### Basisschicht:

| | |
|---|---|
| 100 Gew.-% | Propylenhomopolymerisat (PP) mit einem n-heptanlöslichen Anteil von etwa 3,3 Gew.-% (bezogen auf 100 % PP) und einem Schmelzpunkt von 161 °C; und einem Schmelzflußindex von 2,9 g/10 min bei 230 °C und 2,16 kg Belastung (DIN 53 735) und |

Die Folie war insgesamt 35 µm dick. Im Unterschied zu Vergleichsbeispiel 2 war diese Folie transparent.

Alle Folien nach den Beispielen und den Vergleichsbeispielen wurden in einer Vakuum Metallisieranlage auf der Oberfläche der ersten Deckschicht mit einer Aluminiumschicht beschichtet. Zur Verbesserung der Metallhaftung wurde die Oberfläche unmittelbar vor der Beschichtung einer Plasmabehandlung unterworfen. Die Eigenschaften der metallisierten Folien nach den Beispielen und den Vergleichsbeispielen sind in der Tabelle 1 zusammengestellt. Es zeigt sich, daß die erfindungsgemäßen Folien nach den Beispielen 1, 2 und 3 hervorragende Barrierewerte gegen Wasserdampf und Sauerstoff und gleichzeitig gute Siegeleigenschaften trotz Kontamination bei der Verwendung als Beutelverpackungen für pulverförmige Füllgüter aufweisen.

| Beispiel | Dicke µm | Dichte der Folie g/cm³ | Siegelung ** bei 130 °C 10N, 0,5 sec. | WDD 38°C 90% rel. Feuchte *** | OTR 23°C, 50% rel. Feuchte *** |
|---|---|---|---|---|---|
| Bsp. 1 | 40 | 0,71 | + | < 0,2 | < 20 |
| Bsp. 2 | 40 | 0,71 | ++ | < 0,2 | < 20 |
| Bsp. 3 | 40 | 0,71 | ++ | < 0,2 | < 20 |
| VB 1 | 40 | 0,71 | + | > 0,8 | >100 |
| VB 2 | 40 | 0,71 | + | ~ 0,5 | >100 |
| VB 3 | 40 | 0,71 | + | ~ 0,15 | 9 |
| VB 4 | 35 | 0,91 | -- | > 0,2 | > 20 |
| VB 5 | 35 | 0,91 | -- | > 0,2 | ~ 60 |

| | | | | | |
|---|---|---|---|---|---|
| ** Siegelung der nicht metallisierten 2. Deckschicht gegen sich selbst | | | | | |
| *** nach Metallisierung | | | | | |

## Patentansprüche

1. Metallisierte, biaxial orientierte opake Polypropylenmehrschichtfolie mit mindestens drei Schichten aus einer Basisschicht und mindestens einer ersten metallisierten Deckschicht auf einer Oberfläche der Basisschicht und einer zweiten siegelfähigen Deckschicht auf der gegenüberliegenden Seite, **dadurch gekennzeichnet, daß** die erste Deckschicht mindestens 80 Gew.-% eines Propylen-Ethylen-Copolymeren enthält, welches einen Ethylengehalt von 1,2 bis< 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und die erste Deckschicht eine Dicke von mindestens 4 µm aufweist und die Folie auf der Oberfläche der ersten Deckschicht metallisiert und die Basisschicht vakuolenhaltig ist.

2. Metallisierte, biaxial orientierte opake Polypropylenmehrschichtfolie mit mindestens vier Schichten aus einer Basisschicht und mindestens einer ersten Zwischenschicht und einer ersten Deckschicht und einer zweiten siegelfähigen Deckschicht auf der gegenüberliegenden Seite, **dadurch gekennzeichnet, daß** die erste Deckschicht und die erste Zwischenschicht aufeinander liegen und jeweils mindestens 80 Gew.-% eines Propylen-Ethylen-Copolymeren enthalten, welches einen Ethylengehalt von 1,2 bis < 2,8 Gew.-% und einen Propylengehalt von 97,2 - 98,8 Gew.- % und einen Schmelzpunkt im Bereich von 145 bis 160°C und eine Schmelzenthalpie von 80 bis 110 J/g aufweist und wobei die Gesamtdicke der erste Deckschicht und der erste Zwischenschicht mindestens 4 µm beträgt und die Folie auf der Oberfläche der ersten Deckschicht metallisiert ist und die Basisschicht vakuolenhaltig ist.

3. Folie nach Anspruch 1 oder 2, **dadurch gekennzeichnet, daß** das Propylen-Ethylen-Copolymere 1,5 bis 2,3 Gew.-% Ethylen enthält und einen Schmelzpunkt im Bereich von 150 bis 155 °C und eine Schmelzenthalpie von 90 bis 100 J/g hat.

4. Folie nach einem der Ansprüche 1 bis 3, **dadurch gekennzeichnet, daß** die optische Dichte der Metallschicht mindestens 2,5 beträgt.

5. Folie nach einem der Ansprüche 1 bis 4, **dadurch gekennzeichnet, daß** die Basisschicht aus Propylenhomopolymer aufgebaut ist und 2 bis 25 Gew.-% vakuoleninitierende Füllstoffe enthält.

6. Folie nach einem der Ansprüche 1 bis 5, **dadurch gekennzeichnet, daß** die zweite siegelfähige Deckschicht mindestens 80 bis <100 Gew.-% eines Propylenpolymeren mit mindestens 80 Gew.-% Propyleneinheiten, vorzugsweise Propylenco- und/oder Propylenterpolymere mit einem Propylengehalt von mindestens 90 bis 97 Gew.-%, enthält.

7. Folie nach einem der Ansprüche 1 bis 5, **dadurch gekennzeichnet, daß** die zweite Deckschicht mindestens 80 bis <100 Gew.-% einer Polymer-Mischung enthält, wobei die Mischung aus Propylenpolymeren mit mindestens 80 Gew.-% Propyleneinheiten und Polyethylen besteht und wobei die Mischung 10 bis 50 Gew.-%, bezogen auf das Gewicht der Mischung, des Polyethylens enthält.

8. Folie nach Anspruch 7, **dadurch gekennzeichnet, daß** das Polyethylen ein HDPE oder MDPE ist.

9. Folie nach einem der Ansprüche 1 bis 8, **dadurch gekennzeichnet, daß** die zweite Deckschicht ein Antiblockmittel enthält.

10. Verfahren zur Herstellung einer Folie nach einem der Ansprüche 1 bis 9, **dadurch gekennzeichnet, daß** die polyolefinischen Schichten coextrudiert werden.

11. Verfahren nach Anspruch 10, **dadurch gekennzeichnet, daß** die Folie auf der Oberfläche der ersten Deckschicht während der Folienherstellung mittels Corona, Plasma, oder Flamme vorbehandelt wird.

12. Verfahren, nach Anspruch 11, **dadurch gekennzeichnet, daß** die zu metallisierende Oberfläche unmittelbar vor der Metallisierung mittels Plasma behandelt wird.

13. Verwendung einer Folie nach einem der Ansprüche 1 bis 9 zur Herstellung einer Beutelverpackung.

14. Verwendung nach Anspruch 13, **dadurch gekennzeichnet, daß** die Beutelverpackung durch Siegelung aller vier Ränder hergestellt wird.

15. Verwendung nach Anspruch 13 oder 14, **dadurch gekennzeichnet, daß** das Füllgut der Beutelverpackung pulverförmig ist.

16. Verwendung einer Folie nach einem der Ansprüche 1 bis 9 zur Herstellung eines Laminats mit einer weiteren biaxial orientierten Polypropylenfolie.

17. Verwendung nach Anspruch 16, **dadurch gekennzeichnet, daß** die metallisierte Folie mit der metallisierten Seite gegen eine zweite boPP Folie laminiert wird.

18. Verwendung nach Anspruch 17, **dadurch gekennzeichnet, daß** die zweite boPP Folie des Laminats eine opake Basisschicht aufweist.

19. Verwendung nach Anspruch 16 bis 18, **dadurch gekennzeichnet, daß** die weitere biaxial orientierte Polypropylenfolie bedruckt ist.

## Claims

1. A metallized, biaxially oriented opaque multilayer polypropylene films having at least three layers out of a base layer and at least one first metallized cover layer on a surface of the base layer and a second sealable cover layer on the opposing side, **characterized in that** the first cover layer contains at least 80 wt% of a propylene-ethylene-copolymer, which has an ethylene content of 1.2 to <2.8 wt% and a propylene content of 97.2 - 98.8 wt% and a melting point in the range from 145 °C to 160 °C and an enthalpy of fusion of 80 to 110 J/g and the first cover layer has a thickness of at least 4 µm and the film on the surface of the first cover layer is metallized and the base layer contains vacuoles.

2. A metallized, biaxially oriented opaque multilayer polypropylene film having at least four layers out of a base layer and at least a first intermediate layer and a first cover layer and a second sealable cover layer on the opposing side, **characterized in that** the first cover layer and the first intermediate layer lie on top each other and contain in each case 80 wt% of a propylene-ethylene copolymer, which has an ethylene content of 1.2 to <2.8 wt% and a propylene content of 97.2 - 98.8 wt% and a melting point in the range from 145 °C to 160 °C and an enthalpy of fuision of 80 to 110 J/g and wherein the total layer thickness of the first cover layer and the first intermediate layer is at least 4 µm and the film on the surface of the first cover layer is metallized and the base layer contains vacuoles.

3. The film according to claim 1 or 2, **characterized in that** the propylene-ethylene copolymer contains 1.5 to 2.3 wt% ethylene and has a melting point in the range from 150 to 155 °C and an enthalpy of fusion of 90 to 100 J/g.

4. The film according to one of claims 1 through 3, **characterized in that** the optical density of the metal layer amounts to at least 2.5.

5. The film according to one of claims 1 through 4, **characterized in that** the base layer is formed from polypropylene homopolymer and contains 2 to 25 wt% vacuole initiating filler materials.

6. The film according to one of claims 1 through 5, **characterized in that** the second sealable cover layer contains at least 80 to <100 wt% of a propylene polymer having at least 80 wt% propylene units, preferably propylene co- and/or propylene terpolymers having a propylene content of at least 90 to 97 wt%.

7. The film according to one of claims 1 through 5, **characterized in that** the second cover layer contains at least 80 to <100 wt% of a polymer mixture, wherein the mixture is comprised of propylene polymers having at least 80 wt% propylene units and polyethylene and wherein the mixture contains 10 to 50 wt% of polyethylene in relation to the weight of the mixture.

8. The film according to claim 7, **characterized in that** the polyethylene is an HDPE or an MDPE.

9. The film according to one of claims 1 through 8, **characterized in that** the second cover layer contains an antiblocking agent.

10. A method for manufacture of a film according to one of claims 1 through 9, **characterized in that** the polyolefinic layers are coextruded.

11. The method according to claim 10, **characterized in that** the film on the surface of the first cover layer is pre-treated during film manufacture by means of plasma or flame corona.

12. The method according to claim 11, **characterized in that** the surface to be metallized is treated with plasma immediately before the metallization.

13. Use of a film according to one of claims 1 through 9 for the manufacture of a bag packing.

14. The use according to claim 13, **characterized in that** the bag packing is made by sealing all four edges.

15. The use according to claim 13 or 14, **characterized in that** the filler of the bag packing is powdered.

16. The use of a film according to one of claims 1 through 9 for manufacture of a laminate with another biaxially oriented polypropylene film.

17. The use according to claim 16, **characterized in that** the metallized film is laminated with the metallized side opposite a second boPP film.

18. The use according to claim 17, **characterized in that** the second boPP film of the laminate has an opaque base layer.

19. The use according to claim 16 through 18, **characterized in that** the other biaxially oriented polypropylene film is printed.

## Revendications

1. Film polypropylène multicouches biorienté, métallisé, opaque avec au moins trois couches, constitué d'une couche de base et d'au moins une première couche métallisée de recouvrement sur une surface de la couche de base ainsi que d'une seconde couche scellable de recouvrement sur la face opposée, **caractérisé en ce que** la première couche de recouvrement contient au moins 80 % en poids d'un copolymère propylène-éthylène, lequel présente une teneur en éthylène allant de 1,2 jusqu'à < 2,8 % en poids et une teneur en propylène de 97,2 - 98,8 % en poids ainsi qu'un point de fusion de l'ordre de 145 à 160 °C et une enthalpie de fusion allant de 80 à 110 J/g, **en ce que** la première couche de recouvrement présente une épaisseur d'au moins 4 µm, **en ce que** le film est métallisé sur la surface de la première couche de recouvrement et **en ce que** la couche de base est vacuolée.

2. Film polypropylène biorienté multicouches métallisé, opaque avec au moins quatre couches, constitué d'une couche de base, d'au moins une première couche intermédiaire, d'une première couche de recouvrement et d'une seconde couche scellable de recouvrement sur la face opposée, **caractérisé en ce que** la première couche de recouvrement et la première couche intermédiaire sont superposées et contiennent chacune au moins 80 % en poids d'un copolymère propylène-éthylène, lequel présente une teneur en éthylène allant de 1,2 jusqu'à < 2,8 % en poids et une teneur en propylène de 97,2 -98,8 % en poids ainsi qu'un point de fusion de l'ordre de 145 à 160°C et une enthalpie de fusion allant de 80 à 110 J/g, **en ce que** l'épaisseur totale de la première couche de recouvrement et de la première couche intermédiaire est d'au moins 4 µm, **en ce que** le film est métallisé sur la surface de la première couche de recouvrement et **en ce que** la couche de base est vacuolée.

3. Film selon la revendication 1 ou 2, **caractérisé en ce que** le copolymère propylène-éthylène contient 1,5 à 2,3 % en poids d'éthylène et possède un point de fusion de l'ordre de 150 à 155°C et une enthalpie de fusion de 90 à 100 J/g.

4. Film selon l'une des revendications 1 à 3, **caractérisé en ce que** la densité optique de la couche métallisée est d'au moins 2,5.

5. Film selon l'une des revendications 1 à 4, **caractérisé en ce que** la couche de base est constituée d'homopolymère de propylène et contient 2 à 25 % en poids de charges initiatrices de vacuoles.

6. Film selon l'une des revendications 1 à 5, **caractérisé en ce que** la seconde couche scellable de recouvrement contient au moins 80 à <100 % en poids d'un polymère de propylène ayant au moins 80 % en poids de motifs unitaires propylène, de préférence de co- et/ou de terpolymère de propylène ayant une teneur en propylène d'au moins 90 à 97 % en poids.

7. Film selon l'une des revendications 1 à 5, **caractérisé en ce que** la seconde couche de recouvrement contient au moins 80 à < 100 % en poids d'un mélange de polymères, **en ce que** le mélange se compose de polymères de propylène ayant au moins 80 % en poids de motifs unitaires propylène, ainsi que de polyéthylène, et **en ce que** le mélange contient de 10 à 50 % en poids de polyéthylène, rapportés au poids du mélange.

8. Film selon la revendication 7, **caractérisé en ce que** le polyéthylène est un HDPE ou un MDPE.

9. Film selon l'une des revendications 1 à 8, **caractérisé en ce que** la seconde couche de recouvrement contient un agent anti-bloquant.

10. Procédé de fabrication d'un film selon l'une des revendications 1 à 9, **caractérisé en ce que** les couches polyoléfiniques sont coextrudées.

11. Procédé selon la revendication 10, **caractérisé en ce que** le film est prétraité sur la surface de la première couche de recouvrement et pendant sa fabrication, par effet corona, par plasma ou à la flamme.

12. Procédé selon la revendication 11, **caractérisé en ce que** la surface à métalliser est, immédiatement avant la métallisation, traitée par plasma.

13. Utilisation d'un film selon l'une des revendications 1 à 9 en vue de la fabrication d'un emballage formant sac ou sachet.

14. Utilisation selon la revendication 13, **caractérisée en ce que** l'emballage formant sac est fabriqué par scellage de l'ensemble des quatre bords.

15. Utilisation selon la revendication 13 ou 14, **caractérisée en ce que** la matière de remplissage de l'emballage formant sac est pulvérulente.

16. Utilisation d'un film selon l'une des revendications 1 à 9 en vue de la fabrication d'un complexe avec un autre film polypropylène biorienté.

17. Utilisation selon la revendication 16, **caractérisée en ce que** le film métallisé est contrecollé avec sa face métallisée disposée contre un second film boPP.

18. Utilisation selon la revendication 17, **caractérisée en ce que** le second film boPP du complexe présente une couche de base opaque.

19. Utilisation selon l'une des revendications 16 à 18, **caractérisée en ce que** l'autre film polypropylène biorienté est imprimé.
